# EUROPEAN PATENT APPLICATION

(11) **EP 1 300 716 A1**
(43) Date of publication of application: **09.04.2003**
(21) Application number: 01203809.7
(22) Date of filing: 08.10.2001
(51) Int. Cl.: G02B 27/01, G02B 23/12

(54) **Head mounted display apparatus**

(71) Applicant: Visys AG, 61350 Bad Homburg (DE)
(72) Inventor: Spaas, Gerrit, B-3600 Genk (BE)
(74) Representative: Van Reet, Joseph

(57) **Abstract**

A head mounted display apparatus comprising a head or helmet/cap mount unit, at least one electronic camera (2) for recording images, and a display unit (3) mounted on the head mount unit and comprising image-projecting means for projecting images towards at least one eye of the user to display the images in at least one display region. The head mount unit is arranged to mount the display unit (3) in such a position on the head of the user that the display region is in an upper part of the visual field of the user allowing the user to see the environment when looking horizontally underneath the display unit (3) and, upon an upward rotation of the eyes over an angle α, to look straight to the centre of the display region to see the images. In this way, the user can see clearly the displayed images whilst maintaining his normal view on the environment.

## Description

The present invention relates to a head or helmet/cap mounted display apparatus comprising a head mount unit for mounting the apparatus onto a user's head, at least one electronic camera for recording images from the environment, and a display unit mounted on the head mount unit and comprising image-projecting means for projecting images recorded by the camera towards at least one eye of the user to display the images in at least one display region showing a centre.

Such a head mounted apparatus for displaying images recorded by a camera is already disclosed in a number of patent publications. The patent applications WO9857214, DE-A-19724140 and DE-A-19724141 in the name of Jurca disclose for example night vision spectacles comprising a CCD camera which is more light sensitive than a human eye and two displays for displaying the images recorded by the camera in front of the eyes of the user.

A drawback of these night view spectacles is that the normal field of view of the user is completely obstructed so that the user can only see the images of the environment displayed in the spectacles. This may lead to different problems. For example when the user is walking or due to for example a battery failure or another failure of the apparatus there is an interruption in the displays of the images, a dangerous situation may arise. Also, when such spectacles are worn by a night guard, his field of view may be limited compared to his normal field of view so that there is a greater risk that he has not seen an intruder.

An object of the present invention is therefore to provide a new head mounted display apparatus which enables to give the user additional information about the environment by displaying images from the environment recorded by a camera to him whilst avoiding whatever dangerous situations which may arrive in case of failure of the display apparatus.

To this end the head mounted display apparatus according to the invention is characterised in that the head mount unit is arranged to mount the display unit in such a position on the head of the user that, when the user is standing upright and is holding his head to look straight forward, the display region is in an upper part of the visual field of the user allowing the user to see the environment when looking horizontally underneath the display unit and, upon an upward rotation of the eyes over a first predetermined angle α, to look straight to the centre of the display region to see the images.

It has been found that by positioning the display unit in the upper part of the visual field of the user, the user can clearly see the information or images displayed in the display unit without hampering his normal view on the environment. Due to the fact that he maintains his normal view, no dangerous situation will arise as a result of the presence of the display apparatus onto his head.

In one preferred embodiment, the display apparatus comprises at least one night-vision camera showing a greater light sensitivity as the light sensitivity of a human eye. In another preferred embodiment, it comprises at least one thermal camera arranged to form images based on heat radiation. Both preferred embodiments enable to with an optical and/or electronic zoom so that it is even in the daylight possible to see more details of the environment.

In a further preferred embodiment of the display apparatus according to the invention, it comprises a data inlet arranged to be connected to an external source of images and means to display these images by means of the display unit. This embodiment enables to achieve not only more information about the environment but also to show electronic external information like maps, plans, video and television images or images taken from a computer which may be connected to the internet.

Other particularities and advantages of the invention will become apparent from the following description of some particular embodiments of the display apparatus according to the present invention. The reference numerals used in this description relate to the annexed drawings wherein:
Figure 1 shows a schematic front and side view of a user's head having a head mounted display apparatus according to a particular embodiment of the present invention mounted thereon;
Figure 2 illustrates schematically the location of the visual image formed with the apparatus illustrated in Figure 1;
Figure 3 is a schematic side view analogous to the side view in Figure 1 but showing more details about the principles applied to mount the display apparatus on a user's head, for clarity's sake, the pads pressing against the forehead having not been shown in the correct lateral position;
Figure 4 is a schematic cross-sectional view along lines IV-IV in Figure 3 showing the exact position of the pads pressing against the forehead; and
Figure 5 shows a diagram of the principal elements used in the display unit.

The head mounted display apparatus according to the invention illustrated in the drawing comprises a head mount unit 1, an electronic camera 2 and a display unit 3. The display unit 3 is mounted on the head mount unit 1 through the intermediary of a link 4 which is both hinge connected to the head mount unit 1 and to the display unit 3, more particularly by means of two parallel hinges 5 and 6. The head mount unit 1 comprises a band 19 which is arranged to be applied around the head and which comprises a rigid front portion and an elastic back portion. Between the rigid front portion and the forehead pads 20 are provided.

The camera 2 may be a CCD camera and may show a higher light sensitivity than the human eye so that an enhanced visibility is achieved in the dark or in the twilight. On the other hand, the camera 2 may also be a thermal camera which can form images of the environment based on heat radiation. The camera may further be provided with an optical zoom so that even in daylight, the images of the camera provide for additional information about the environment. When the display apparatus is mounted on the user's head, the camera will usually be directed forwards. However, the camera could possibly also be directed backwards. Optionally, means could be provided to adjust the direction of the camera, for example to enable the user to use the display apparatus both in the head-up position illustrated in the drawings and in a position wherein the display apparatus in lowered in front of the eyes.

In the illustrated embodiment, the images recorded by the camera 2 are sent via a flexible cable 7 to a so-called power unit 8 containing image processing means and usually a self-contained power source and other electronic means or connections to external apparatus. The image processing means enable for example to adjust the contrast and/or the brightness of the images. They further may provide for an electronic zoom function.

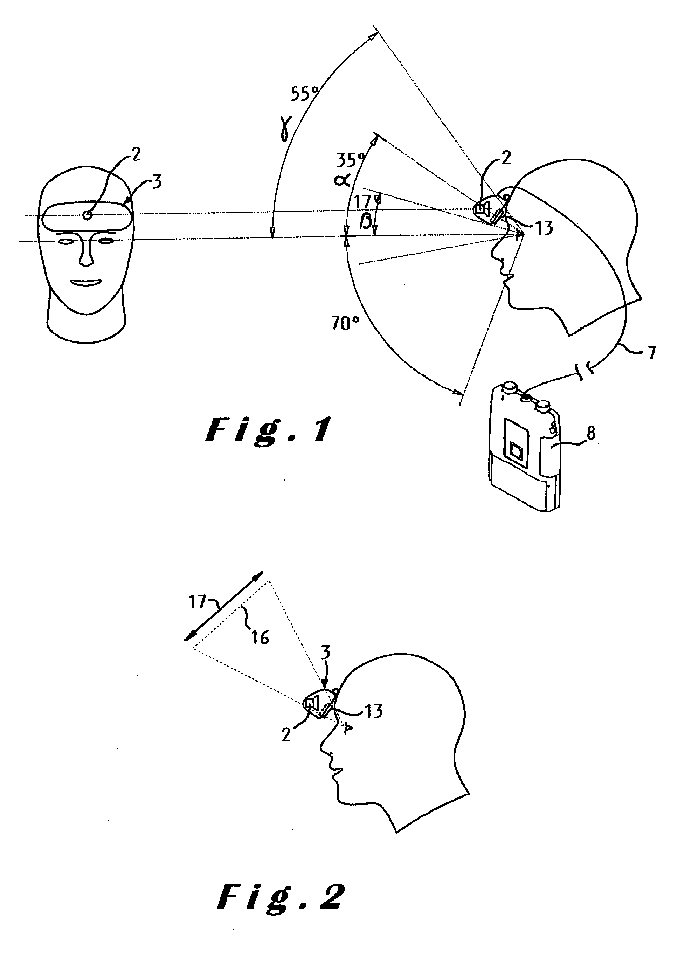

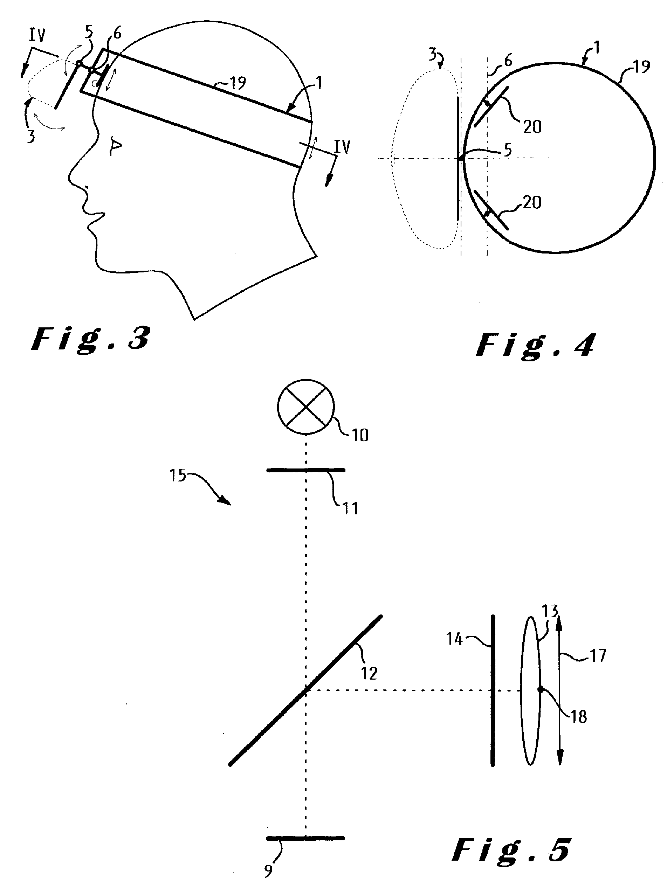

The processed images are sent back to the display unit 3 via the flexible cable 7. Figure 5 illustrates a preferred way of displaying these images to the user by means of preferred image projecting means 15. In short, the images are displayed on a micro display 9, more particularly on an LCOS (liquid-crystal display on silicone), in a manner known per se. This LCOS 9 is illuminated by means of a light source 10. The light emitted by this light source 10 is polarised through a polarisation foil 11 and passes through a semitransparent mirror 12 before arriving at the LCOS. The light is reflected by the LCOS and subsequently by the mirror 12 which is directed under an angle of about 45° such as to reflect the light towards a magnifying lens 13. Between the mirror 12 and the lens 13 a second polarisation foil 14 is positioned in a direction perpendicular to the direction of the first polarisation foil 11. The image projecting means 15, or more particularly the display unit 3, is positioned in such a manner that the images generated on the LCOS are projected towards an eye of the user. It is also possible to use selfilluminated micro displays such as OLEDs (organic light emitting diodes). The eye should more particularly be situated within the exit to pupil range of the optics used to display the images in order to have a clear view thereof. Figure 2 illustrates the position and the size of the enlarged virtual image 16 generated by the display unit 3. The area where the virtual images 16 are displayed or the portion of the last element of the display unit, i.e. of the lens 13, through which the light beams leave the display unit 3, can be considered as display region 17, the middle of which is the centre 18 of the display region.

In the display apparatus according to the invention, it is possible to project the images only to one eye of the user. However, in a preferred embodiment, binocular image-projecting means, comprising two image projecting means 15 as illustrated in Figure 5 parallel to one another, are provided so that images are projected in both eyes of the user. In this embodiment, the images projected to both eyes may be recorded by one and the same camera. However, it is also possible to provide two camera's 2 which are positioned on a distance from one another to provide different images which are transmitted to the respective eye. In that way a three-dimensional view can be provided.

In order to avoid a complete obstruction of the normal field of view of the user, the display unit 3 is not positioned in front of the eyes. Instead, the head mount unit 1 is arranged to mount the display unit 3 in such a position on user's head that, when the user is standing upright and is holding his head to look straight forward (see Figure 1), the display region 17 is in an upper part of the visual field of the user allowing the user to see the environment when looking horizontally underneath the display unit 3 and, upon an upward rotation of the eyes over a first predetermined angle α, to look straight to the centre 18 of the display region 17 to see the images. In the embodiment illustrated in Figure 3, this positioning is allowed by means of the hinges 5 and 6, which enable to direct the display unit towards the eyes and to adjust the distance between the display unit and the eyes. The vertical position of the display unit can be adjusted by placing the head mount unit 1 higher or lower onto the head or by sliding the head band on backside of head.

As illustrated in Figure 1, the field of view of a person standing upright and keeping his head in the normal position to look horizontally extends from the horizontal direction over an angle y of about 55° upwards when moving only his eyes. In the display apparatus according to the invention, an upper portion of this angle is used to display the images whilst a lower portion is kept free to allow a normal sight onto the environment. This lower portion extends preferably over an angle β of at least 5°, more preferably over an angle β of at least 10°, and most preferably over an angle β of at least 15° with the horizontal direction (in the case that the user is standing upright and is holding his head in the normal position to look in the horizontal direction). In this way, a sufficient part of the field of view is kept free for the normal view, i.e. for looking with the eyes directly to the environment. When the user is standing upright and is holding his head to look straight forward, the angle β can be determined as the angle formed with the horizontal direction, in a direction perpendicular to the face of the user, by a plane going through the pupils of the user's eyes and situated tangent to the lower edge of the display unit.

The angle α over which the user has to rotate his eyes to look to the centre of the display region, or to the centre of the displayed virtual images, is preferably larger than 20°, more preferably larger than 25° and most preferably larger than 30°. In this way, the virtual image may extend over a sufficiently large vertical angle without obstructing the normal view. In order to enable a clear view of the virtual images without having to force the eyes too much upwards, the angle α is further preferably smaller than 40° and most preferably smaller than 37°. In the illustrated embodiment, the angle α comprises about 35° whilst the angle β comprises about 17°.

In addition to the above described functions and elements, further functions can be provided in the display apparatus according to the invention. The display apparatus, in particular the power unit thereof, can for example be provided with a data inlet arranged to be connected to an external source of images and with means to display also these images by means of the display unit. It may in particular be connected to a video, CD or DVD player or it may even contain such a player which can for example optionally also be used to store recorded images. All these informations are only visible by the user and by no one else, and as such the invention offers an additional advantage, in that it has the ability to handle or manage private or secret data.

It can further be arranged to be connected to the internet or to other means of communication in order to transmit the images recorded to other locations or in order to receive images from such other locations.

From the above given description, it will be clear that the display apparatus may be useful for a number of different applications. It may for example be useful for a surgeon performing a surgical operation, the display apparatus providing in particular a clearer or for example a thermal view of the organ to be operated. The display apparatus is further useful for nightblind/visually impaired persons, for foto laboratory workers (working in dark room and handling film material), for handcraft/handling, for maintenance/service/inspection (for example electronic and electric installations), for policemen and night guards, for border control, for fire fighters (giving for example a view on hidden fire cores by means of a thermal camera), for hunters.

## Claims

1. A head mounted display apparatus comprising a head mount unit for mounting the apparatus onto a user's head, at least one electronic camera for recording images from the environment, and a display unit mounted on the head mount unit and comprising image-projecting means for projecting images recorded by the camera towards at least one eye of the user to display the images in at least one display region showing a centre, **characterised in that** the head mount unit is arranged to mount the display unit in such a position on the head of the user that, when the user is standing upright and is holding his head to look straight forward, the display region is in an upper part of the visual field of the user allowing the user to see the environment when looking horizontally underneath the display unit and, upon an upward rotation of the eyes over a first predetermined angle α, to look straight to the centre of the display region to see the images.

2. An apparatus according to claim 1, **characterised in that** when the display unit is mounted in said position on the head of the user, and when the user is standing upright and is holding his head to look straight forward, a plane going through the pupils of the user's eyes and situated tangent to the lower edge of the display unit forms, in a direction perpendicular to the face of the user, a second predetermined angle β of at least 5°, preferably of at least 10° and most preferably of at least 15°, with the horizontal direction.

3. An apparatus according to claim 1 or 2, **characterised in that** said first predetermined angle α is an angle larger than 20°, preferably larger than 25° and most preferably larger than 30° but smaller than 40° and preferably smaller than 37°.

4. An apparatus according to any one of the claims 1 to 3, **characterised in that** the image-projecting means comprise a micro-crystal display for forming images, and a light source and optics to enlarge the images and to project them into the eyes of the user.

5. An apparatus according to any one of the claims 1 to 4, **characterised in that** it comprises at least one night-vision camera showing a greater light sensitivity as the light sensitivity of a human eye.

6. An apparatus according to any one of the claims 1 to 5, **characterised in that** it comprises at least one thermal camera arranged to form images based on heat radiation.

7. An apparatus according to any one of the claims 1 to 6, **characterised in that** said camera is provided with an optical and/or an electronic zoom.

8. An apparatus according to any one of the claims 1 to 7, **characterised in that** said camera is mounted movably into the apparatus and the apparatus further comprises means to adjust the direction of the camera.

9. An apparatus according to any one of the claims 1 to 8, **characterised in that** it comprises a first part destined to be mounted on the head of a user and a second part connected to the first part and destined to be carried by the user.

10. An apparatus according to any one of the claims 1 to 9, **characterised in that** it comprises a data inlet arranged to be connected to an external source of images and means to display these images by means of the display unit.

11. An apparatus according to any one of the claims 1 to 10, **characterised in that** the image-projecting means are binocular image-projecting means arranged to project towards both eyes of the user images recorded by said camera to display the images into two display regions, one for each eye and each showing a centre, both display regions being positioned in such a manner that the user has to rotate his eyes over a same predetermined angle α to look straight to the centres of the display regions to see the images.

12. An apparatus according to claim 11, **characterised in that** it comprises at least two cameras, the images recorded by one camera being projected to one eye of the user and the images recorded by the second camera being projected to the second eye of the user, the cameras being preferably positioned to provide a three-dimensional view to the user.
